# EUROPEAN PATENT APPLICATION

(11) **EP 2 784 028 A1**
(43) Date of publication of application: **01.10.2014**
(21) Application number: 13192994.5
(22) Date of filing: 15.11.2013
(51) Int. Cl.: C02F 1/04, C02F 1/06, C02F 1/14, B01D 3/06, B01D 3/14, F22B 1/00, B01D 1/26, F03G 6/00, F01K 17/04, C02F 103/08

(54) **Integrative system of concentrating solar power plant and desalination plant**

(30) Priority: 28.03.2013 JP 2013067980
(71) Applicant: Hitachi, Ltd., Tokyo 100-8280 (JP)
(72) Inventor: Mishima, Nobuyoshi, Tokyo, 100-8280 (JP); Sakakura, Toshihiko, Tokyo, 100-8280 (JP); Sudo, Mitsuru, Tokyo, 100-8280 (JP); Nagafuchi, Naoyuki, Tokyo, 100-8280 (JP)
(74) Representative: MERH-IP Matias Erny Reichl Hoffmann

(57) **Abstract**

An integrative system of a concentrating solar power plant and desalination plant comprises a solar heat collector (3) which generates superheated steam using solar heat (2), condensation type steam turbine power generation equipment (8) which uses steam as a heat cycle medium, and multistage flash or multiple-effect desalination equipment (56-59). Superheated steam (45) is generated by the solar heat collector (3) and supplied to the power generation equipment (8) to generate power (90) and steam is extracted from a condensation type steam turbine middle stage of the power generation equipment (8) and supplied to the desalination equipment (56-59). A steam supply line (46) which bypasses the steam turbine (8) and adjusts the pressure and temperature of steam from the solar heat collector (3) and supplies the steam to the desalination equipment is provided.

## Description

### [Technical Field]

The present invention relates to an integrative system of a concentrating solar power plant and desalination plant which combines a solar power plant and a solar desalination plant.

### [Background Art]

The use of solar heat as a heat source for steam turbine power generation equipment and seawater desalination equipment has been proposed. PCT Publication No. WO98/40313 (PTL1) proposes combination of solar power generation and solar seawater desalination. According to PTL1, a medium (for example, lithium bromide aqueous solution) is heated by a solar heat collector, the heated medium is supplied to a steam turbine to generate electric power, and the medium which has emitted energy in the steam turbine is cooled by a vacuum condenser (heat exchanger) located in a seawater tank and the cooled medium is supplied again to the solar heat collector through a vacuum pump and a liquidizing device. In this technique, the medium is thus circulated to generate power and at the same time the seawater in the seawater tank is heated through heat exchange with the medium by the vacuum condenser so as to evaporate and desalinate it.

### [Summary of Invention]

### [Technical Problem]

According to PTL1, in order for the steamturbine to perform both power generation and seawater desalination using solar heat, all exhaust steam from the steam turbine is introduced into the vacuum condenser.

Widely used desalination techniques include desalination using a reverse osmosis membrane and desalination by evaporation. As systems based on the latter technique or desalination by evaporation, multistage flash systems and multiple-effect systems are now in practical use. In both the multistage flash and multi-effect systems, steam with a prescribed pressure at low to high flow rates is required depending on the amount of freshwater generated. Therefore, if exhaust steam from a steam turbine of thermal power generation equipment is used in a multistage flash system or multiple-effect system, the system may be combined with back-pressure steam turbine power generation equipment.

For this reason, the above technique described in PTL1, in which all exhaust steam from the steam turbine is introduced into the vacuum condenser to use the heat of exhaust steam for evaporation, cannot be applied to widely used multistage flash ormultiple-effect systems. This is because a multistage flash system or multiple-effect system requires steam with a somewhat high pressure (for example, 0.4 MPaG). Furthermore, in the above technique, for example, lithium bromide aqueous solution steam is used as a medium for driving the steam turbine and circulation of the medium must be closed. For this reason, the technique cannot be applied to a multistage flash or multiple-effect system.

Also, in steam turbine power generation equipment which uses solar heat, it is possible to adopt various means, including heat storage equipment, to ensure stable power generation, but because of the characteristics of natural energy, it may be difficult to generate rated power constantly. Also, a connected electric power system may necessitate the system to operate at partial load or stop power generation operation. When steam from such solar-powered steam turbine equipment is used, the desalination equipment may be unable to generate the required amount of freshwater due to the power generation equipment. In the past, no consideration has been given to this problem.

An object of the present invention is to provide an integrative system of a concentrating solar power plant and desalination plant for generating electric power and desalinating seawater using solar heat by a steam turbine, in which both the concentrating solar power plant and desalination plant can operate efficiently.

Another object of the present invention is to provide an integrative system of a concentrating solar power plant and desalination plant which can supply desired steam to the desalination equipment regardless of change in the load of the steam turbine power generation equipment.

### [Solution to Problem]

According to one aspect of the present invention, there is provided an integrative system of a concentrating solar power plant and desalination plant which combines a solar heat collector which generates superheated steam using solar heat, and condensation type steam turbine power generation equipment which uses steam as a heat cycle medium, and multistage flash or multiple-effect type desalination equipment. In the system, superheated steam is generated by the solar heat collector and supplied to the steam turbine power generation equipment to generate power and steam is extracted from a steam turbine middle stage of the steam turbine power generation equipment and supplied to the desalination equipment.

According to another aspect of the present invention, the integrative system of the concentrating solar power plant and desalination plant further includes a steam supply line which bypasses the steam turbine and adjusts the pressure and temperature of steam from the solar heat collector and supplies the steam to the desalination equipment or a steam supply line which adjusts the pressure and temperature of steam extracted from among a plurality of stages of the steam turbine for steam extraction and supplies the steam to the desalination equipment.

### [Advantageous Effects of Invention]

According to the present invention, there is provided an integrative system of a concentrating solar power plant and desalination plant in which both the power plant and the desalination plant can operate efficiently.

Furthermore, according to the present invention, regardless of change in the load of the steam turbine power generation equipment, desired steam can be continuously supplied to the desalination equipment.

The above and further objects and novel features of the invention will more fully appear from the following detailed description in this specification.

### [Brief Description of Drawings]

Fig. 1 shows an integrative system of a concentrating solar power plant and desalination plant according to an embodiment of the present invention; and
Fig. 2 shows an integrative system of a concentrating solar power plant and desalination plant according to a second embodiment of the present invention.

### [Description of Embodiments]

Next, the preferred embodiments of the present invention will be described in detail referring to the accompanying drawings.

### (First Embodiment)

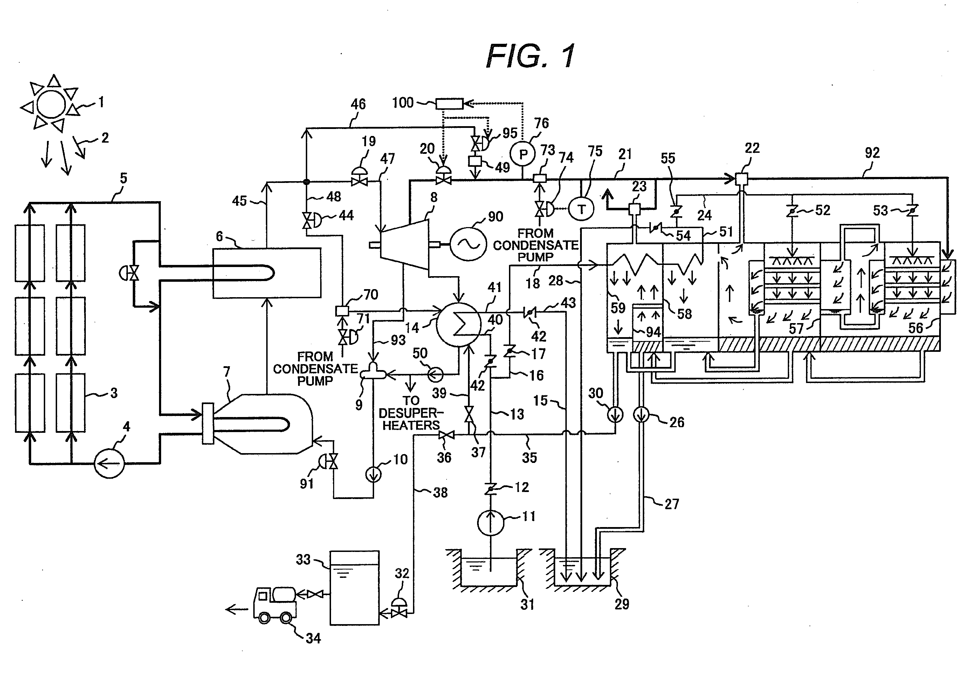

A first embodiment of the present invention is described below referring to Fig. 1. This embodiment concerns an integrative system of a concentrating solar power plant and desalination plant as a combination of a concentrating solar power plant and a solar desalination plant which can perform power generation operation and freshwater generation operation using only solar heat.

The integrative system of the concentrating solar power plant and desalination plant according to this embodiment mainly combines a solar heat collector, steam turbine power generation equipment and desalination equipment.

The solar heat collector in this embodiment is structured to generate superheated steam using solar heat and also designed as a trough type solar heat collector. The trough type solar heat collector in this embodiment mainly includes a trough type mirror 3 for reflecting solar rays 2 from the sun 1 and collecting solar heat energy and concentrating the heat energy on a heat medium; a trough type heat collector outlet pipe 5; a steam superheater 6; a water evaporator 7; and a heat medium circulating pump 4. Generally, an oil equivalent to turbine bearing lubricant is used as the heat medium.

The heat medium which has exited the heat medium circulating pump 4 is heated by solar heat through the trough type mirror 3 and the heated hot heat medium passes through the trough type heat collector outlet pipe 5 and flows down into the steam superheater 6. In the steam superheater 6, the hot heat medium superheats the saturated steam generated by the water evaporator 7 and generates main steam to rotate the steam turbine 8 of the steam turbine power generation equipment. The steam generated by the solar heat collector also contains driving steam for the desalination equipment. The medium-temperature heat medium which has emitted heat energy in the steam superheater 6 is used as a heating medium in the water evaporator 7. Feed water is supplied from the steam turbine power generation equipment to the water evaporator 7. The low-temperature heat medium which has emitted heat energy in the water evaporator 7 is again sent to the trough type mirror 3 by the heat medium circulating pump 4. The solar heat collector is not limited to the trough type but it may be of the Fresnel type, tower type or hybrid type as a combination of the tower and Fresnel types.

The solar power generation equipment collects solar heat in the daytime and generates steam using the heat and supplies the steam to the steam turbine to rotate the generator for power generation and at the same time, part of the heat may be stored in the daytime so that the stored solar heat energy is radiated at night to generate steam using the heat and the steam is supplied to the steam turbine to rotate the generator for power generation. If the system is thus configured, the desalination equipment can get steam and generate freshwater at night.

The steam turbine power generation equipment in this embodiment is condensation type steam turbine power generation equipment which uses steam as a heat cycle medium. It mainly includes a main steam control valve 19, steam turbine inlet pipe 47, steam turbine 8, and steam turbine generator 90 and also includes a condensate/feed water system comprised of a condenser 14, condensate pump 50, deaerator 9, solar heat collector feed water pump 10, and feed water control valve 91. When seawater is used as cooling water for the condenser 14, the equipment also includes a seawater intake channel 31 to take in seawater from the seacoast, circulating water pump 11, circulating water pump outlet valve 12, condenser inlet circulating water pipe 13, condenser inlet valve 42, condenser inlet circulating water pipe 40, condenser outlet circulating water pipe 41, condenser outlet valve 43, condenser outlet circulating water pipe 15, and seawater discharge channel 29. The steam turbine 8 has a steam extraction pipe which extracts steam from a middle stage. In this embodiment, a steam extraction pipe 92 for the desalination equipment is provided in addition to the deaerator heated steam extraction pipe 93.

In this embodiment, multiple-effect desalination equipment is used as the desalination equipment. The multiple-effect desalination equipment in this embodiment mainly includes a first utility chamber 56, second utility chamber 57, first condenser 58, second condenser 59, concentrated seawater chamber 94, desalination equipment steam supply pipe 21, main steam ejector 22, main steam ejector outlet pipe 96, vent ejector 23, desalination equipment seawater inlet pipe 18, first condenser outlet seawater pipe 51, seawater inlet pipe 24, seawater discharge pipe 28, concentrated seawater discharge pipe 27, and freshwater pipe 35. The seawater inlet pipe 24 includes a seawater spraying valve 55, second utility chamber inlet seawater vale 52, and first utility chamber inlet seawater valve 53. The concentrated seawater discharge pipe 27 includes a concentrated seawater discharge pump 26 and the freshwater pipe 35 includes a freshwater conveying pump 30. The desalination equipment seawater inlet pipe 18 includes a desalination equipment seawater inlet valve 17 and the seawater discharge pipe 28 includes a seawater discharge valve 54. The desalination equipment is not limited to the multiple-effect type; instead it maybe multistage flash desalination equipment. Both the multistage flash type and multiple-effect type require steam with a prescribed pressure at low to high steam flow rates depending on the amount of freshwater generated.

Next, how the fluids flow in the solar heat collector, steam turbine power generation equipment, and desalination equipment as shown in Fig. 1 will be explained to indicate how the solar heat collector, steam turbine power generation equipment, and desalination equipment are operated in conjunction with each other systematically.

First, an explanation will be given of the relation among output, the amount of steam, and the amount of freshwater generated by the solar heat collector, steam turbine power generation equipment, and desalination equipment.

In this embodiment, a medium-output power plant is used as the solar power plant comprised of a solar heat collector and steam turbine power generation equipment. The "medium-output" here means that the nominal output of the solar power plant is approximately in the range from 50 MWe to 250 MWe. This embodiment may be applied to a solar power plant with a slightly higher or lower output level than this range. On the other hand, the amount of freshwater generated by the solar desalination plant is in the range from 500 t/D (20.8 t/h) to 9000 t/D (375 t/h). Therefore, if the steam rate as the rate of output to main steam flow rate is about 3.5, the main steam flow rate of the steam turbine must be 175 t/h to 875 t/h to cope with output of about 50 MWe to 250 MWe. On the other hand, the required steam flow rate to generate freshwater at 500 t/D (20.8 t/h) to 9000 t/D (375 t/h) is 2.6 t/h to 46.9 t/h on the assumption that the gain output ratio is 8 and there is no problem with steam extraction at a required flow rate from the middle stage of an about 50-250 MWe class steam turbine. If a higher rate of freshwater generation than this is required, the capacity of the solar steam generator may be increased or the steam turbine size may be increased when necessary.

After the high-temperature steam generated by the steam superheater 6 in the trough type solar heat collector using the heat energy of the sun 1 passes through the steam superheater outlet pipe 45, during normal operation (operation at the rated load), it passes through the main steam control valve 19 and flows in the steam turbine inlet pipe 47 and is introduced into the steam turbine 8. The high-temperature steam introduced in the steam turbine 8 rotates the steam turbine 8 and drives the generator 90 to generate power.

The exhaust steam from the steam turbine 8 is sent to the condenser 14 where it is cooled to become condensed water or condensate. Seawater is used as cooling water for the condenser 14. Specifically, the seawater flowing in the seawater intake channel 31 is pressurized by the circulating water pump 11 and passed through the circulating water pump outlet valve 12, condenser inlet circulating water pipe 13, and condenser inlet valve 42 and sent to the condenser 14 where it is used as cooling water for the condenser. The hot discharged water from the condenser 14 passes through the condenser outlet circulating water pipe 41 and further through the condenser outlet valve 43 before being discharged into the seawater discharge channel 29 and finally returned to the sea.

The vacuum condition in the condenser 14 is kept by a vacuum pump (not shown in the figure), etc. The condensate in the condenser 14 is taken out by the condensate pump 50 and sent to the deaerator 9.

The condensate sent to the deaerator 9 is heated and deaerated by the steam which is extracted from the steam turbine 8 by the deaerator heated steam extraction pipe 93 and introduced into the deaerator 9. The condensate heated and deaerated by the deaerator 9 is pressurized by the solar heat collector feed water pump 10 and passed through the feed water control valve 91 and sent to the water evaporator 7 in the trough type solar heat collector.

On the other hand, steam is extracted from the middle stage of the steam turbine 8 at a pressure selected to match the pressure requested by the multiple-effect desalination equipment. In this embodiment, the pressure (driving steam pressure) requested by the multiple-effect desalination equipment is set, for example, to 0.8 MPaG and the steam extraction pipe 92 for the desalination equipment is located in a middle stage of the steam turbine 8 where steam which matches the requested steam pressure can be extracted.

The steam extracted from the steamturbine 8 passes through a steam turbine steam extraction valve 20 and a desuperheater 73 for the desalination equipment, flows down in a desalination equipment steam supply pipe 21 before being introduced into a main steam ejector 22. The steam turbine steam extraction valve 20 is controlled by a controller 100 when necessary so that the reading of a steampressure gauge 76 reaches a prescribed pressure value and its opening is also controlled so as to attain the steam flow rate requested by the multiple-effect desalination equipment depending on the amount of freshwater generated in the multiple-effect desalination equipment. In connection with the desalination equipment desuperheater 73, the opening of the desalination equipment desuperheater regulating valve 74 is adjusted so that the reading of a steam thermometer 75 reaches a prescribed steam temperature value (for example, saturated temperate at that steam pressure + several tens of degrees) and the flow rate of condensate from the branched pipe from downstream of the condensate pump 50 is adjusted to spray the condensate. During normal operation, it is unnecessary to control the steam temperature using the desalination equipment desuperheater 73.

The steam which has flown down in the desalination equipment steam supply pipe 21 is sent to the main steam ejector 22 and vent ejector 23 and the degrees of vacuum in the second utility chamber 57 and second condenser 59 are kept high.

Part of the seawater used as cooling water for the condenser 14 passes through a desalination equipment seawater supply branch pipe 16 of the condenser inlet circulating water pipe 13 and further through the desalination equipment seawater inlet valve 17 and desalination equipment seawater inlet pipe 18 before being sent as raw seawater to the multiple-effect desalination equipment.

The desalination equipment seawater inlet pipe 18 is partially located inside the second condenser 59 and first condenser 58 and the seawater flowing in the desalination equipment seawater inlet pipe 18 is continuously heated while passing through the pipes located inside the second condenser 59 and first condenser 58, and flows down in the first condenser outlet seawater pipe 51 located outside. The heated seawater is split from the first condenser outlet seawater pipe 51 into a flow on the seawater spraying valve 55 side (seawater inlet pipe 24) and a flow on the seawater discharge valve 54 side (seawater discharge pipe 28).

The seawater flowing on the seawater spraying valve 55 side passes through the first utility chamber inlet seawater valve 53 and is sprayed into the first utility chamber 56; similarly it passes through the second utility chamber inlet seawater valve 52 and is sprayed into the second utility chamber 57. The sprayed seawater generates steam with a pressure equivalent to the saturated steam pressure in each chamber. The generated steam is again liquefied and the desalinated moisture is separated and collected in each chamber to generate freshwater. In the embodiment shown in Fig. 1, two utility chambers are provided but three or more utility chambers may be provided.

The freshwater collected in the second utility chamber 57 joins the water as freshwater generated from the saturated steam in the first condenser 58 which has been cooled by the seawater pipe (desalination equipment seawater inlet pipe 18) in the first condenser 58, and flows to the second condenser 59 in the next chamber. Similarly the saturated steam in the second condenser 59 is cooled by the desalination equipment seawater inlet pipe 18 and turns into freshwater and stays in the second condenser 59. The freshwater accumulated in the second condenser 59 is pressurized by the freshwater conveying pump 30 and flows down in the freshwater pipe 35.

Part of the freshwater flowing down in the freshwater pipe 35 passes through a condenser make-up water inlet valve 37 and flows down in a condenser make-up water inlet pipe 39 before being supplied to the condenser 14. Since steam is extracted from the middle stage of the steam turbine and supplied to the desalination equipment, it is necessary to supply make-up water to the condensate/feed water system of the steam turbine power generation equipment. If the quality of supplied freshwater does not meet the water quality conditions requested by the steam turbine power generation equipment, a deionized water supply device may be installed in the outlet line of the condenser make-up water inlet valve 37, though not shown in Fig. 1.

The rest of the freshwater flowing down in the freshwater pipe 35 (freshwater except the make-up water to the condenser 14) flows down through a freshwater storage tank branch valve 36, freshwater storage tank inlet pipe 38 and freshwater storage tank water level adjusting valve 32 before being sent to a freshwater storage tank 33 and stored there. The stored freshwater is transported by a transportation truck 34.

The seawater accumulated under the first utility chamber 56 shown in Fig. 1 moves to the next second utility chamber 57 and finally stays in a concentrated seawater chamber 94. The concentrated seawater collected in the concentrated seawater chamber 94, in which moisture is evaporated and the salt content is high, is guided into a concentrated seawater discharge pipe 27 by a concentrated seawater discharge pump 26 and drained into the seawater discharge channel 29 before being returned to the sea finally.

The pressure in each chamber is a negative pressure. In terms of the absolute pressure values of the chambers, the following relation is held in consideration of the direction in which the concentrated seawater flows:
First utility chamber 56 > Second utility chamber 57 > Concentrated seawater chamber 94.

There may be a case that even when power generation operation at partial load is necessary for some reason on the side of the steam turbine power generation equipment including the solar heat collector or power generation operation is stopped due to an emergency stop of the generator 90, the desalination equipment is expected to continue freshwater generation operation.

In order to stop power generation operation, the main steam control valve 19 is closed to stop the steam turbine 8 and a turbine bypass valve 95 of the desalination equipment is opened to let the steam generated using solar heat flow down in a turbine bypass pipe 46 of the desalination equipment and lead it into the steam supply pipe 21 of the desalination equipment. Since the steam introduced by bypassing the steam turbine 8 has a higher temperature and a higher pressure than the steam extracted from the middle stage, its temperature is decreased by a desalination equipment desuperheater 49 before being introduced into the steam supply pipe 21 of the desalination equipment. The turbine bypass valve 95 of the desalination equipment is controlled by the controller 100 so that the reading of the steam pressure gauge 76 reaches a prescribed pressure value and its opening is also controlled so as to attain the steam flow rate requested by the multiple-effect desalination equipment depending on the amount of freshwater generated in the multiple-effect desalination equipment. In connection with the desalination equipment desuperheater 73, the opening of the desalination equipment desuperheater regulating valve 74 is adjusted so that the reading of the steam thermometer 75 reaches a prescribed steam temperature value, and the condensate is sprayed.

When the steam generated using solar heat is not supplied to the steam turbine of the steam turbine power generation equipment, if more steam than requested by the desalination equipment is generated by the solar heat collector or the main steam pressure becomes abnormally high, a condenser steam turbine bypass valve 44 is opened to let part of the steam generated by the solar heat collector flow down in a condenser steam turbine bypass valve inlet pipe 48 and lead it into the condenser 14. To lead it into the condenser 14, the condenser desuperheater regulating valve 74 is opened to spray the condensate into the condenser desuperheater 70 to decrease the temperature of the steam generated by the solar heat collector and lead it into the condenser 14. The condenser 14 turns the introduced steam into condensate. Even when the steam turbine power generation equipment stops power generation operation, the circulating pump 11 is continuously operated to continue supplying seawater to the condenser 14 to cool the steam. Also, in order to ensure that steam is generated continuously in the solar heat collector, even when power generation operation of the steam turbine power generation equipment is stopped, the condensate/feed water system (condensate pump 50, deaerator 9, solar heat collector feed water pump 10, feed water control valve 91, etc.) is also continuously operated. The heated steam to be supplied to the deaerator 9 is supplied through the condenser steam turbine bypass valve inlet pipe 48 (not shown) .

Consequently, even when the steam turbine power generation equipment stops power generation operation, supply of steam with a prescribed pressure required by the desalination equipment is ensured and the desalination equipment can continue freshwater generation operation.

Also, when the steam turbine power generation equipment is operated at partial load with a decreased opening degree of the main steam control valve 19, as when power generation operation is stopped, the desalination equipment turbine bypass valve 95 is opened to let part of the steam generated by the solar heat collector flow down in the desalination equipment steam turbine bypass pipe 46 to decrease its temperature and lead it into the desalination equipment steam supply pipe 21. At this time, the steam turbine steam extraction valve 20 may be closed or the opening of the steam turbine steam extraction valve 20 and that of the desalination equipment turbine bypass valve 95 may be controlled by the controller 100 so that the reading of the steam pressure gauge 76 reaches a prescribed pressure value. The other procedures are the same as when power generation operation is stopped. For example, the condenser steam turbine bypass valve 44 is opened to let part of the steam generated by the solar heat collector flow down in the condenser steam turbine bypass valve inlet pipe 48 and lead it into the condenser 14. Instead of the process in which the desalination equipment turbine bypass valve 95 is opened to let part of the steam generated by the solar heat collector flow down in the desalination equipment steam turbine bypass pipe 46 and lead it into the desalination equipment steam supply pipe 21, the system may be structured to allow steam extraction from a plurality of stages of the steam turbine 8 so that during normal operation, steam is extracted through a downstream steam extraction pipe and during partial load operation, steam is extracted through an upstream steam extraction pipe to ensure that steam with a prescribed pressure requested by the desalination equipment is introduced into the desalination equipment steam supply pipe 21.

If the multiple-effect desalination equipment is urgently stopped during normal operation (operation at the rated load) of the steam turbine power generation equipment for some reason, the steam turbine steam extraction valve 20 is closed and the condenser steam turbine bypass valve 44 is opened to have the temperature of excess steam generated by the solar heat collector decreased by the condenser desuperheater 70 and the excess steam is collected by the condenser 14. By doing so, the steam turbine power generation equipment can continue power generation operation even if the desalination equipment is urgently stopped.

According to this embodiment, steam with a prescribed pressure as required by the desalination equipment can be easily obtained by selecting a steam extraction stage of the steam turbine. Also, by selecting a steam extraction stage during normal operation of the steam turbine power generation equipment, the extracted steam can be supplied to the desalination equipment without decreasing the steam temperature and/or pressure, so the extracted steam can be efficiently utilized. Therefore, a large amount of steam as requested by the desalination equipment canbe supplied from the steam turbine power generation equipment to the desalination equipment without a decline in the efficiency of the steam turbine, so that both the power plant and the desalination plant can operate efficiently in the integrative system of the concentrating solar power plant and desalination plant.

According to this embodiment, regardless of change in the load on the steam turbine power generation equipment (including stop of power generation operation), for example, steam generated by the solar heat collector is forced to bypass the steam turbine and its temperature and pressure are adjusted and the adjusted steam is supplied to the desalination equipment, so desired steam can be continuously supplied to the desalination equipment. Therefore, the desalination equipment can be continuously operated without a decline in the amount of freshwater generated.

In this embodiment, a line which guides the steam generated by the solar heat collector into the condenser is provided, so either power generation operation by the concentrating solar power plant or freshwater generation operation by the solar desalination plant can be performed independently with safety. Therefore, in response to the demand for electricity or water, the system can be operated only for power generation or only for freshwater generation, so the integrative system of the concentrating solar power plant and desalination plant can be operated very effectively. Even if the concentrating solar power plant suddenly stops power generation operation, the solar desalination plant can continue freshwater generation operation safely and conversely even if the solar desalination plant stops urgently, the concentrating solar power plant can continue power generation operation safely.

In addition, according to this embodiment, a large amount of steam is generated using solar heat without combustion of fossil fuel and electric power and freshwater are generated using this steam, so a large amount of electric power and freshwater can be generated in an environmentally friendly manner without carbon dioxide emissions at low cost.

### (Second Embodiment)

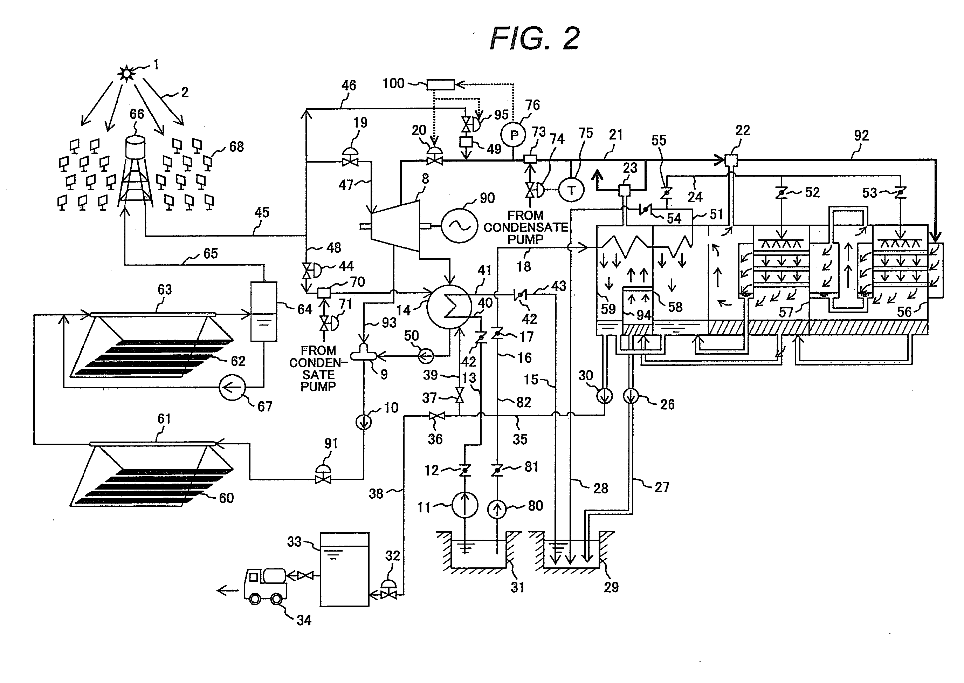

A second embodiment of the present invention is described below referring to Fig. 2. This embodiment also concerns an integrative system of a concentrating solar power plant and desalination plant as a combination of a concentrating solar power plant and a solar desalination plant which can perform power generation and freshwater generation using only solar heat.

This embodiment is different from the first embodiment shown in Fig. 1 in terms of the type of solar heat collector and the configuration of the seawater cooling water line to the steam turbine condenser and its seawater supply line to the desalination equipment. Specifically, this embodiment uses a hybrid solar heat collector including a Fresnel mirror and a heliostat mirror. Furthermore, the seawater cooling water line to the steam turbine condenser and the seawater supply line to the desalination equipment are separated from each other. Basically the other elements are the same as in the first embodiment and detailed description thereof is omitted.

The hybrid solar heat collector in this embodiment uses water as a heat medium. Solar rays 2 are collected into a Fresnel heater heat-collecting pipe 61 by a Fresnel heater mirror 60 and feed water sent from a solar heat collector feed water pump 10 is passed through the Fresnel heater heat-collecting pipe 61 to heat the water. The feed water heated by the Fresnel heater heat-collecting pipe 61 is passed through a Fresnel evaporator heat-collecting pipe 63 and evaporated using the solar heat energy of solar rays 2 collected into the Fresnel evaporator heat-collecting pipe 63 by a Fresnel evaporator mirror 62. The brackish water evaporated by the Fresnel evaporator heat-collecting pipe 63 flows into a Fresnel evaporator steam separator 64 where it is divided into saturated steam and saturated drain. The saturated drain is sent to the Fresnel evaporator heat-collecting pipe 63 by a Fresnel evaporator circulating pump 67.

The saturated steam separated by the Fresnel evaporator steam separator 64 flows in a Fresnel heat collector steam separator outlet pipe 65 and enters a heat collecting tower 66 where it is heated by the solar heat energy reflected and collected by many heliostat mirrors 68 to increase the steam temperature and turn the steam into superheated steam. The superheated steam passes through a steam superheater outlet pipe 45 to be used as driving steam for the steam turbine 8 and as driving steam for the desalination equipment. As in the first embodiment shown in Fig. 1, the steam extracted from the middle stage of the steam turbine 8 is used as driving steam for the multiple-effect desalination equipment.

In this embodiment, the heat medium of the solar heat collector and the heat cycle medium of the steam turbine power generation equipment are water/steam and the heat medium cycle is integrated using the common heat medium. More specifically, the solar heat collector uses water/steam as a heat medium to generate superheated steam and the steam turbine power generation equipment is of the condensation type which uses steam as a heat cycle medium. The steam extracted from the middle stage of the steam turbine is supplied to the desalination equipment. The solar heat collector, steam turbine power generation equipment and desalination equipment are operated using the same medium.

In this embodiment, a circulating water pump 11 is used only to send seawater cooling water to the condenser 14 of the steam turbine. The seawater required by the multiple-effect desalination equipment is pressurized by a special desalination equipment seawater pump 80 and passes through a desalination equipment seawater pump outlet valve 81 and flows in a desalination equipment seawater pump outlet pipe 82. After that, as in the first embodiment, it flows down through a desalination equipment seawater inlet valve 17 and flows in a desalination equipment seawater inlet pipe 18 before being supplied to the multiple-effect desalination equipment. This eliminates the need for a large seawater pump. Also when only the power generation equipment is operated, the desalination equipment seawater pump 80 need not be operated, leading to lower operation cost.

In this embodiment as well, both the power plant and the desalination plant can operate efficiently in the integrative system of the concentrating solar power plant and desalination plant. In addition, this embodiment brings about the same advantageous effects as the first embodiment: for example, regardless of change in the load on the steam turbine power generation equipment, desired steam can be continuously supplied to the desalination equipment.

The present invention is not limited to the above embodiments and includes other various forms of embodiments. For example, the above embodiments have been explained in detail for easy understanding of the present invention, but an embodiment of the invention need not include all the elements of the above embodiments. Some elements of an embodiment may be replaced by elements of another embodiment or elements of an embodiment may be added to another embodiment. Also, for some elements of an embodiment, addition of other elements, deletion or replacement is possible.

### [Reference Signs List]

- 1: Sun
- 2: Solar rays
- 3: Trough type mirror
- 4: Heat medium circulating pump
- 5: Trough type heat collector outlet pipe
- 6: Steam superheater
- 7: Water evaporator
- 8: Steam turbine
- 9: Deaerator
- 10: Solar heat collector feed water pump
- 11: Circulating water pump
- 12: Circulating water pump outlet valve
- 13: Condenser inlet circulating water pipe
- 14: Condenser
- 15: Condenser outlet circulating water pipe
- 16: Desalination equipment seawater supply branch pipe
- 17: Desalination equipment seawater inlet valve
- 18: Desalination equipment seawater inlet pipe
- 19: Main steam control valve
- 20: Steam turbine steam extraction valve
- 21: Desalination equipment steam supply pipe
- 22: Main steam ejector
- 23: Vent ejector
- 24: Seawater inlet pipe
- 26: Concentrated seawater discharge pump
- 27: Concentrated seawater discharge pipe
- 28: Seawater discharge pipe
- 29: Seawater discharge channel
- 30: Freshwater conveying pump
- 31: Seawater intake channel
- 32: Freshwater storage tank water level adjusting valve
- 33: Freshwater storage tank
- 34: Freshwater transportation truck
- 35: Freshwater pipe
- 36: Freshwater storage tank branch valve
- 37: Condenser make-up water inlet valve
- 38: Freshwater storage tank inlet pipe
- 39: Condenser inlet pipe
- 40: Condenser inlet circulating water pipe
- 41: Condenser outlet circulating water pipe
- 42: Condenser inlet valve
- 43: Condenser outlet valve
- 44: Condenser steam turbine bypass valve
- 45: Steam superheater outlet pipe
- 46: Desalination equipment steam turbine bypass pipe
- 47: Steam turbine inlet pipe
- 48: Condenser steam turbine bypass valve inlet pipe
- 49: Desalination equipment desuperheater
- 51: First condenser outlet seawater pipe
- 50: Condensate pump
- 52: Second utility chamber inlet seawater valve
- 53: First utility chamber inlet seawater valve
- 54: Seawater discharge valve
- 55: Seawater spraying valve
- 56: First utility chamber
- 57: Second utility chamber
- 58: First condenser
- 59: Second condenser
- 60: Fresnel heater mirror
- 61: Fresnel heater heat-collecting pipe
- 62: Fresnel evaporator mirror
- 63: Fresnel evaporator heat-collecting pipe
- 64: Fresnel evaporator steam separator
- 65: Steam separator outlet pipe
- 66: Heat collecting tower
- 67: Fresnel evaporator circulating pump
- 68: Heliostat mirror
- 70: Condenser desuperheater
- 73: Desalination equipment desuperheater
- 80: Desalination equipment seawater pump
- 81: Desalination equipment seawater pump outlet valve
- 82: Desalination equipment seawater pump outlet pipe
- 90: Generator
- 91: Feed water control valve
- 92: Desalination equipment steam extraction pipe
- 93: Deaerator heated steam extraction pipe
- 94: Concentrated seawater chamber
- 95: Desalination equipment steam turbine bypass valve
- 96: Main steam ejector outlet pipe
- 100: Controller

## Claims

1. An integrative system of a concentrating solar power plant and desalination plant, comprising:
a solar heat collector;
a steam turbine power generation equipment which generates power using steam generated by the solar heat collector; and
a desalination equipment which turns seawater into freshwater using energy of the steam from the steam turbine power generation equipment,
wherein the solar heat collector generates superheated steam using solar heat;
wherein the steam turbine power generation equipment is condensation type steam turbine power generation equipment which uses steam as a heat cycle medium;
wherein the desalination equipment is multistage flash type or multiple-effect type desalination equipment; and
wherein a steam supply line which extracts steam from a steam turbine middle stage of the steam turbine power generation equipment and supplies it to the desalination equipment is provided.

2. The integrative system of the concentrating solar power plant and desalination plant according to Claim 1, further comprising a steam supply line which bypasses the steam turbine (8) and supplies steam from the solar heat collector to the desalination equipment.

3. The integrative system of the concentrating solar power plant and desalination plant according to Claim 1, wherein the steam supply line is configured to be supplied with the steam from a plurality of middle stages for steam extraction from the steam turbine (8) and change a middle stage for steam extraction depending on load of the steamturbine power generation equipment to supply steam to the desalination equipment.

4. The integrative system of the concentrating solar power plant and desalination plant according to Claim 2 or 3, further comprising a steam supply line which bypasses the steam turbine (8) and leads superheated steam generated by the solar heat collector into a condenser (14) of the steam turbine power generation equipment.

5. The integrative system of the concentrating solar power plant and desalination plant according to Claim 1, wherein the solar heat collector exchanges heat between a heat medium heated by solar heat and the heat cycle medium in the steam turbine power generation equipment to generate superheated steam.

6. The integrative system of the concentrating solar power plant and desalination plant according to Claim 1, wherein the solar heat collector uses water as a heat medium which is also used as the heat cycle medium in the steam turbine power generation equipment.

7. The integrative system of the concentrating solar power plant and desalination plant according to Claim 4, wherein the solar heat collector exchanges heat between a heat medium heated by solar heat and the heat cycle medium in the steam turbine power generation equipment to generate superheated steam.

8. The integrative system of the concentrating solar power plant and desalination plant according to Claim 4, wherein the solar heat collector uses water as a heat medium which is also used as the heat cycle medium in the steam turbine power generation equipment.

9. The integrative system of the concentrating solar power plant and desalination plant according to Claim 1, wherein seawater is used as cooling water for a condenser (14) of the steam turbine power generation equipment and a seawater supply line for supplying seawater for freshwater generation to the desalination equipment is provided as a branch line from a cooling water supply line for supplying cooling water to the condenser (14).

10. The integrative system of the concentrating solar power plant and desalination plant according to Claim 1, wherein a sea water supply line for supplying seawater as cooling water for a condenser of the steam turbine power generation equipment to the condenser and another sea water supply line for supplying seawater for freshwater generation to the desalination equipment are separately provided so as to be operated independently.
